# EUROPEAN PATENT SPECIFICATION

(11) **EP 1 492 245 B1**
(45) Date of publication and mention of the grant of the patent: **14.11.2007**
(21) Application number: 04023589.7
(22) Date of filing: 21.09.2000
(51) Int. Cl.: H04B 1/48

(54) **Transmitting-receiving switch**
Sende-Empfangsumschalter
Commutateur d'émission-réception

(30) Priority: 24.09.1999 JP 27042499
(43) Date of publication of application: 29.12.2004
(62) Divisional of application: 00120663.0
(73) Proprietor: MATSUSHITA ELECTRIC INDUSTRIAL CO., LTD, Kadoma-shi, Osaka 571-8501 (JP)
(72) Inventor: Nakamura, Hiroyuki, Katano-shi Osaka 576-0016 (JP); Sakakura, Makoto, Uji-shi Kyoto 611-0041 (JP); Takada, Junnichi, Kamakura-shi Kanagawa 248-0025 (JP); Yoshizumi, Jyunichi, Nara-shi, Nari 631-0045 (JP)
(74) Representative: Grünecker, Kinkeldey, Stockmair & Schwanhäusser Anwaltssozietät

(56) References cited:
- US-A- 5 473 293
- US-A- 5 911 116
- PATENT ABSTRACTS OF JAPAN vol. 018, no. 549 (E-1618), 19 October 1994 (1994-10-19) -& JP 06 197040 A (MURATA MFG CO LTD), 15 July 1994 (1994-07-15)

## Description

### Field of the Invention

The present invention relates to a transmitting-receiving switch which is utilized for switching signal transmission lines in high frequency circuits such as a radio unit or a portable terminal unit.

### Related Art of the Invention

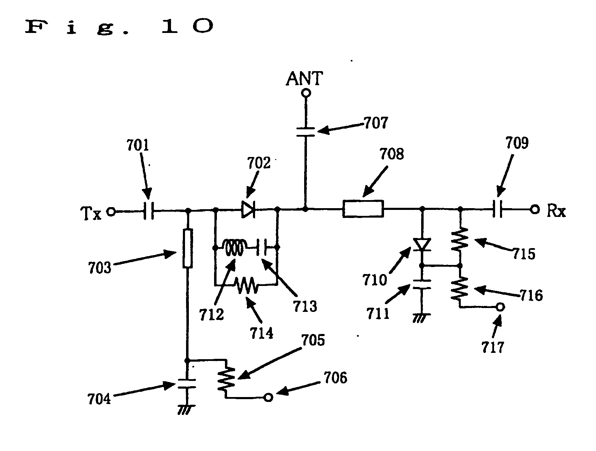

Fig 10 is a diagram showing a configuration of a transmitting-receiving switch according to a prior art (see the Japanese patent publication 2822824 for details).

As shown in the figure, in a conventional transmitting-receiving switch, a transmission circuit Tx is connected to the anode of the first diode 702 via a capacitor 701, and the anode of the first diode 702 is connected to the ground via the first strip line 703, which works as a choke coil, and a capacitor 704. In addition, the middle point between the first strip line 703 and the capacitor 704 is connected to the first control terminal 706 via a resistance 705. The cathode of the first diode 702 is connected to an antenna ANT via a capacitor 707. The second strip line 708 is connected to the antenna ANT and the second strip line 708 is then connected to a receiving circuit Rx via a capacitor 709. Moreover, the middle point between the second strip line 708 and the capacitor 709 is connected to the ground via a serial circuit of the second diode 710 and a capacitor 711.

Furthermore, a serial circuit of an inductor 712 and a capacitor 713 is connected in parallel to the first diode 702 and a resistance 714 is connected in parallel to the first diode 702, that is to say, to the serial circuit of the inductor 712 and the capacitor 713. In addition, another resistance 715 is connected to the second diode 710 in parallel and this resistance 715 is connected to the second control terminal 717 via a resistance 716. Accordingly, the second control terminal 717 is connected to the cathode end of the second diode 710.

The operation of the transmitting-receiving switch according to the prior art which has the above described configuration is described in the following.

In the case that a transmission is carried out in this transmitting-receiving switch, a positive voltage is applied to the first control terminal 706 so that a voltage in the forward direction is applied to the first and the second diodes 702 and 710 to be turned on and a transmission signal from the transmission circuit Tx is transmitted from the antenna ANT. On the other hand, the second strip line 708 is connected to the ground by the second diode 710 to resonate, of which the impedance becomes infinitely large and, therefore, the transmission signal is not transmitted to the receiving circuit Rx.

Next, in the case that a reception is carried out in this transmitting-receiving switch, a voltage application to the first control terminal 706 is halted and a positive voltage is applied to the second control terminal 717. The voltage applied to the second control terminal 717 is divided by the resistances 714, 715 or the like so as to be applied to the first and the second diodes 702 and 710 as a voltage in the backward direction and, therefore, the first and the second diodes 702 and 710 are turned off without fail so that a reception signal is transmitted to the receiving circuit Rx.

In the operation of the above described reception, a capacitance component exists in the diodes and, therefore, in some cases the reception signal leaks to the transmission circuit Tx. On the contrary, this transmitting-receiving switch forms a parallel resonance circuit with a capacitance component of the first diode 702 and the inductor 712 and, thereby, an isolation between the transmission circuit Tx and the antenna ANT is made clear and the first diode 702 is turned off without fail by applying a positive voltage to the second control terminal 717. Therefore, no dispersion is generated in the capacitance component of the first diode 702 so as to be able to gain a stable resonance frequency, to have a complete isolation between the transmission circuit Tx and the antenna ANT and to make smaller an insertion loss between the antenna ANT and the receiving circuit Rx.

The configuration and the operation of the conventional transmitting-receiving switch are as described above, and in such a conventional transmitting-receiving switch, however, a bias voltage is applied to the first diode 702 from the second control terminal 717 in the backward direction by using a resistance voltage division at the time of reception.

Therefore, there is a problem that a sufficient bias voltage cannot be applied in the backward direction to the second diode 710 which contributes greatly to the reception loss and, therefore, the reception loss becomes large.

The present invention is provided to solve such a conventional problem and it is the purpose of the invention to provide a transmitting-receiving switch which can reduce a reception loss while maintaining the transmission characteristics through a configuration which can apply a sufficient bias voltage in the backward direction to the diodes at the time of receiving.

This is achieved by the features as set forth in the independent claims. Further advantageous embodiments of the present invention are set forth in the dependent claims.

A first transmitting-receiving switch comprising:
an antenna terminal connected to an antenna;
a transmission terminal connected to a transmission circuit;
a reception terminal connected to a receiving circuit;
a first control terminal for applying a voltage;
a second control terminal for applying a voltage;
a first diode of which an anode is connected to said antenna terminal end and said first control terminal end and of which a cathode is connected to said transmission terminal end and said second control terminal end;
a strip line connected between said antenna terminal and said reception terminal; and
a second diode of which an anode is connected to a point between said strip line and said reception terminal and of which a cathode is connected to said second control terminal.

A first transmitting-receiving switch may be characterized in that:
a positive voltage is applied to said first control terminal and no voltage is applied or a negative voltage is applied to said second control terminal at the time of transmission; and
no voltage is applied or a negative voltage is applied to said first control terminal and a positive voltage is applied to said second control terminal at the time of reception.

A first transmitting-receiving switch may be further characterized in that:
the anode and the cathode of said first diode are connected via a serial circuit of an inductor and a capacitor; and
the cathode of said second diode is connected to the ground via a capacitor.

A second transmitting-receiving switch comprising:
an antenna terminal connected to an antenna;
a transmission terminal connected to a transmission circuit;
a reception terminal connected to a receiving circuit;
a first control terminal for applying a voltage;
a second control terminal for applying a voltage;
a first diode of which a cathode is connected to said antenna terminal end and said first control terminal end and of which an anode is connected to said transmission terminal end and said second control terminal end;
a strip line connected between said antenna terminal and said reception terminal; and
a second diode of which a cathode is connected to a point between said strip line and said reception terminal and of which an anode is connected to said second control terminal.

A second transmitting-receiving switch may be characterized in that:
a negative voltage is applied to said first control terminal and no voltage is applied or a positive voltage is applied to said second control terminal at the time of transmission; and
no voltage is applied or a positive voltage is applied to said first control terminal and a negative voltage is applied to said second control terminal at the time of reception.

A second transmitting-receiving switch may be further characterized in that:
the cathode and the anode of said first diode are connected via a serial circuit of an inductor and a capacitor; and
the anode of said second diode is connected to the ground via an inductor and a capacitor connected in parallel.

A transmitting-receiving switch may be further characterized in that the positive voltage, which is applied to said control terminal or said second control terminal, is set so that Q value of said second diode becomes 1.5 times or more as large as Q value when the positive voltage is not applied or the zero voltage is applied.

A transmitting-receiving switch may be further characterized in that said strip line is formed of a distributed constant circuit or a concentrated constant circuit.

A transmitting-receiving switch may be further characterized in that the anode and the cathode of said second diode are connected via a serial circuit of an inductor and a capacitor.

The above described transmitting-receiving switch is characterized by applying a sufficient bias voltage in the backward direction to the diode which connects the point between the antenna terminal and the reception terminal to the ground.
Fig 1 is a configuration diagram of a transmitting-receiving switch according to a first embodiment;
Fig 2(a) is a diagram of a diode connected in parallel to the ground;
Fig 2(b) is a simplified equivalent circuit diagram of a diode connected in parallel to the ground when being turned off.
Fig 3 shows a graph indicating the characteristics between the Q value of the diode when being turned off and the loss at the time of parallel connection to the ground as well as the voltage biased in the backward direction;
Fig 4 is another configuration diagram of a transmitting-receiving switch according to the first embodiment;
Fig 5 is a further mode diagram of a transmitting-receiving switch configuration according to the first embodiment;
Fig 6 is a configuration diagram of a transmitting-receiving switch according to the first embodiment of the present invention;
Fig 7 is the second example configuration diagram of a transmitting-receiving switch according to the second embodiment of the present invention;
Fig 8 is a configuration diagram of a transmitting-receiving switch according to a third embodiment;
Fig 9 is the second example configuration diagram of a transmitting-receiving switch according to a third embodiment; and
Fig 10 is a configuration diagram of a transmitting-receiving switch according to a prior art.

### Description of Symbols

- 101: antenna terminal
- 102: transmission terminal
- 103: reception terminal
- 104: control terminal
- 105,108,110,114,116,118,402,505,508,603,701,704,707,709,711,713: capacitor
- 106,702: first diode
- 107: node
- 109: strip line
- 111,112,115,119,401,503,506,601,712: inductor
- 113,504,507,602,705,714,715,716: resistance
- 117,710: second diode
- 501,706: first control terminal
- 502,717: second control terminal
- 703: first strip line
- 708: second strip line

Embodiments of a transmitting-receiving switch are described with reference to the drawings in the following.

### (First Embodiment)

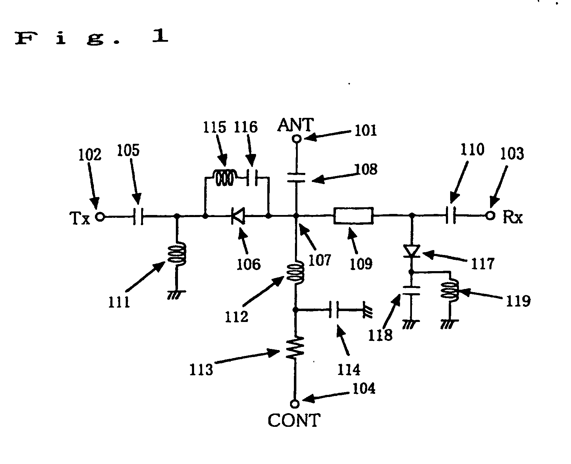

Fig 1 is a diagram showing a transmitting-receiving switch of the first embodiment. In a transmitting-receiving switch of Fig 1, an antenna terminal 101 is connected to an antenna ANT, a transmission terminal 102 is connected to a transmission circuit Tx, a reception terminal 103 is connected to a receiving circuit Rx and a control terminal 104 is connected to a control circuit CONT which carries out a switching control. The transmission terminal 102 is connected to the cathode of the first diode 106 via a capacitor 105 and the anode of the first diode 106 is connected to the antenna terminal 101 via a node 107 and a capacitor 108. The antenna terminal 101 is also connected to the reception terminal 103 via the capacitor 108, the node 107, a strip line 109 and a capacitor 110. And the cathode of the first diode 106 is connected to the ground via an inductor 111. The anode of the first diode 106 is connected to the control terminal 104 via the node 107, an inductor 112 and a resistance 113, and the middle point between the inductor 112 and the resistance 113 is connected to the ground via a capacitor 114.

In addition, a serial circuit of an inductor 115 and a capacitor 116 is connected in parallel to the first diode 106. And the anode of the second diode 117 is connected to the middle point between the strip line 109 and the capacitor 110 and the cathode of the second diode 117 is connected to the ground via a capacitor 118 and an inductor 119 in parallel.

The operation of the transmitting-receiving switch of the present embodiment which has the above described configuration is described as follows:

First, the operation of connection to the transmission circuit is described. In the case that the transmission circuit Tx and the antenna ANT are connected in the transmitting-receiving switch, a positive voltage is applied to the control terminal 104 from the control circuit CONT so as to activate the first and the second diodes 106 and 117. At this time, the positive voltage applied from the control terminal 104 is cut off in the direct current by the capacitors 105, 108, 110, 114 , 116 and 118 so that a positive voltage is applied only to the circuit including the first diode 106, the inductors 111, 112 and the resistance 113 as well as the circuit including the second diode 117, the strip line 109, the inductors 112, 119 and the resistance 113 so that the first and the second diodes 106 and 117 are turned on.

Under the above described condition, the transmission terminal 102 and the antenna terminal 101 are connected when the impedance there-between is lowered by turning on the first diode 106. At this time, though the cathode of the first diode 106 is connected to the ground via the inductor 111, there is no influence of the connection to the ground in the high frequency under the condition where the inductor 111 works as a choke coil by making the impedance sufficiently high in the transmission frequency.

And the impedance on the side of the reception terminal 103 seen from the node 107 becomes too large to transmit a signal from the transmission terminal 102 to the receiving circuit Rx since the strip line 109 is connected to the ground in the high frequency so as to resonate by turning on the second diode 117.

At the time of transmission, the first and the second diodes 106 and 117 are turned on and, under this condition, an inductance component exists in those diodes and, therefore, the impedance of the receiving circuit Rx seen from the node 107 can not be made large enough.

Therefore, in the present embodiment, the cathode of the second diode 117 is connected to the ground via the capacitor 118 and, thereby, a serial resonance circuit is formed of the inductance component in the second diode 117 and the capacitor 118 so that the impedance of the receiving circuit Rx seen from the node 107 becomes large enough. Thereby, no signal from the transmission circuit Tx leaks to the receiving circuit Rx so that an insertion loss of the transmission circuit Tx and the antenna ANT can be made small.

Next, the operation of connection to the receiving circuit is described. In the case that an antenna ANT and a receiving circuit Rx are connected in the transmitting-receiving switch, a negative voltage is applied from the control circuit CONT to the control terminal 104 to turn off the first and the second diodes 106 and 117.

Under the above described condition, a path from the antenna terminal 101 to the transmission terminal 102 is cut off by turning off the first diode 106 and, in addition, the impedance between the reception terminal 103 and the antenna terminal 101 is lowered by turning off the second diode 117 so that the both are connected.

At this time, a capacitance component exists in the first and the second diodes 106 and 117 and, therefore, in the case that a reception signal from the antenna ANT leaks to the transmission circuit Tx, that may sometimes lead to a further increase of the insertion loss of the reception due to the parallel connection of the second diode 117.

However, in a transmitting-receiving switch of the present embodiment, since an inductor 115 is connected to the first diode 106 in parallel, the capacitance component of the first diode 106 and the inductor 115 form a parallel resonance circuit so that the impedance on the transmission circuit side seen from the node 107 becomes quite large and a reception signal from the antenna ANT is transmitted to the receiving circuit Rx without leaking to the transmission circuit Tx.

In addition, the second diode 117 is connected to the first diode 106 in parallel and a negative voltage from the control terminal 104 is applied without being divided so that a sufficient bias voltage is applied in the backward direction and, therefore, the loss at the second diode 117 can be limited to the minimum so as to improve the insertion loss of the reception.

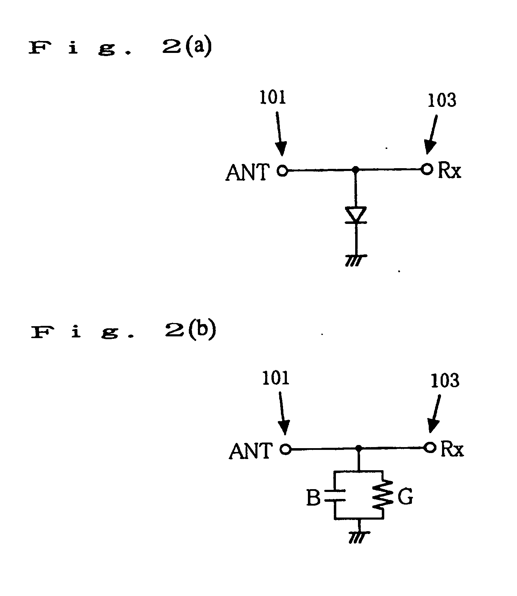

Here, the operation of the second diode 117 is described in detail. Taking only the second diode into account, a configuration is gained wherein the second diode 117 is connected to the ground in parallel at the time of reception as shown in Fig 2 (a), of which the equivalent circuit is represented as in Fig 2(b) simply by the conductance G and the susceptance B.

By applying a voltage in the backward direction to this second diode 117, the impedance varies due to the magnitude of the bias voltage in the backward direction, that is to say, the Q value of the second diode varies. In this case the Q value is represented as Q=B/G.

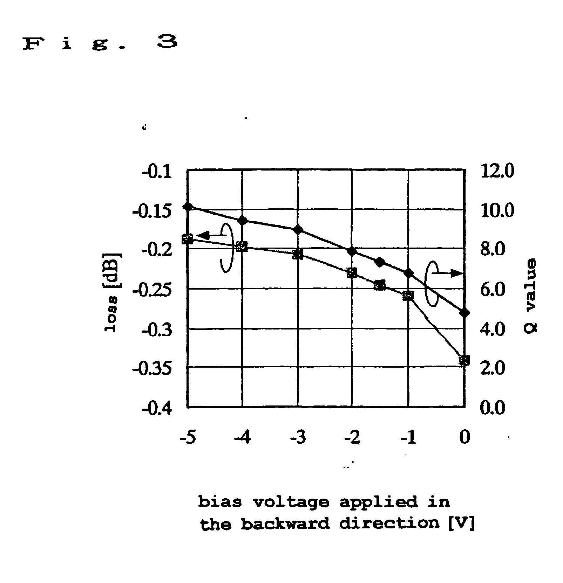

Fig 3 shows the relationships between the magnitude of the bias voltage applied in the backward direction to the second diode 117 in the frequency of 2 GHz band and the Q value as well as the loss between the antenna terminal 101 and the reception terminal 103. In Fig 3, the abscissa denotes the voltage in the backward direction and the ordinate denotes the Q value and the loss.

As is clear from Fig 3, the larger the bias voltage in the backward direction is, the larger the Q value of the second diode 117 is and, the smaller the loss between the antenna terminal 101 and the reception terminal 103 is. That is to say, the larger the bias voltage in the backward direction is, the more the loss at the time of receiving can be improved. For example, it is understood that the loss between the antenna terminal 101 and the reception terminal 103 is approximately 0.35 dB at the time of 0 V and approximately 0.25 dB at the bias voltage in the backward direction of -1.5 V.

Accordingly, the following can be said from Fig 3. That is to say, by applying the bias voltage of -1.5 V in the backward direction of which the Q value (approximately 0.75) becomes approximately 1.5 times as large as the Q value (approximately 0.5) at the time of zero voltage in the second diode 117, the loss between the antenna terminal 101 and the reception terminal 103 has been improved by approximately 0.1 dB (0.35 dB-0.25 dB=0.1 dB).

As described above, the desirable value of the bias voltage applied in the backward direction to the second diode can be said to be the value where the Q value of the second diode becomes approximately 1.5 times or more compared to the Q value when the bias voltage in the backward direction is the zero voltage.

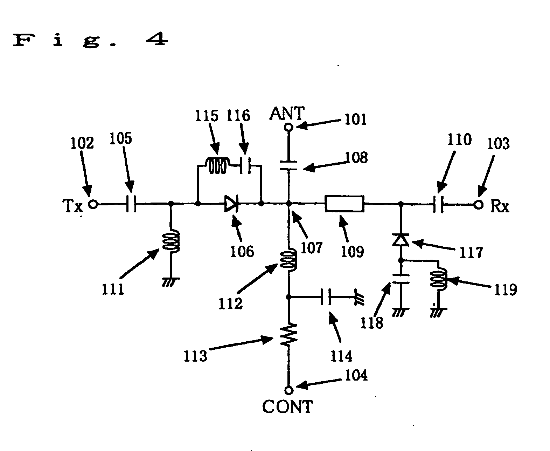

Next, Fig 4 shows the second configuration example of the transmitting-receiving switch according to the first embodiment. As shown in the figure, the second configuration example of the transmitting-receiving switch according to the present embodiment is different from the above described first configuration example in the point where the polarities of the first and the second diodes are respectively reversed. That is to say, as shown in the figure, the transmission terminal 102 is connected to the anode of the first diode 106 via the capacitor 105 and, the cathode of the first diode 106 is connected to the antenna terminal 101 via the node 107 and the capacitor 108 in the transmitting-receiving switch. In addition, the anode of the first diode 106 is connected to the ground via the inductor 111. The cathode of the first diode 106 is connected to the control terminal 104 via the node 107, the inductor 112 and the resistance 113 and the middle point between the inductor 112 and the resistance 113 is connected to the ground via the capacitor 114.

The operation of the second configuration example according to the present embodiment which has the above described configuration is as follows: That is to say, in the case the transmission circuit Tx and the antenna ANT are connected, a negative voltage is applied from the control circuit CONT to the control terminal 104 so as to activate the first and the second diodes 106 and 117 so that the transmission terminal 102 and the antenna terminal 101 are connected when the impedance there-between is lowered by turning on the first diode 106. In the same way as the above described first example, in this case, the strip line 109 is connected to the ground in the high frequency so as to resonate by turning on the second diode 117 and, therefore, the impedance on the side of the reception terminal 103 seen from the node 107 becomes too large to transmit a signal from the transmission terminal 102 to the receiving circuit Rx.

Next, in the case that the antenna ANT and the receiving circuit Rx are connected, a positive voltage is applied from the control circuit CONT to the control terminal 104 to turn off the first and the second diodes 106 and 117 and the impedance between the reception terminal 103 and the antenna terminal 101 is lowered so that the both are connected by turning off the second diode 117. In addition, in the same way as the above described first example, the second diode 117 is connected in parallel to the first diode 106 so that a positive voltage from the control terminal 104 is applied without being divided and, therefore, a sufficient bias voltage is applied in the backward direction so as to be able to limit the loss at the second diode 117 to the minimum and to improve the insertion loss of the reception.

In this way, the transmitting-receiving switch of the first embodiment comprises an antenna terminal connected to the antenna, a transmission terminal connected to the transmission circuit, a reception terminal connected to the receiving circuit, the first diode of which the cathode is connected to the above described transmission terminal end and of which the anode is connected to the above described antenna terminal end and the control terminal end, a strip line connected between the above described antenna terminal and the above described reception terminal and the second diode of which the anode is connected to a point between the above described strip line and the above described reception terminal and of which the cathode is connected to the ground, wherein a bias voltage applied in the backward direction to the first and the second diodes 106 and 117 can be made larger and, thereby, the loss at the time of reception can be improved.

Here, the characteristics of Fig 3 as shown in the first embodiment vary depending on the utilized diodes, of which the magnitude of the voltage in the backward direction and the improved amount are different from the values in the present examples, however, the effects of lowering the loss at the time of reception are gained in the same way by making the Q value larger through the application of a bias voltage applied in the backward direction.

The strip line is ideal when the length is 1/4 of the wave length λ with respect to the transmission frequency and may be formed of a distributed constant circuit or a concentrated constant circuit. And the inductors 111, 112, 115 and 119 may be formed of coils or strip lines and, with respect to those inductors, it is desirable to use inductors of which the Q value is high considering the loss.

The capacitor 116 is connected in series to the inductor 115 which is connected in parallel to the first diode 106 in order to prevent the direct current from flowing through the inductor 115, and the values of those elements may be set to the values which provide a parallel resonance between the capacitance component of the first diode 106 and the serial circuit of the inductor 115 and the capacitor 116.

The cathode (the anode in the second configuration example) of the second diode 117 is connected to the ground in parallel via the capacitor 118 and the inductor 119 and, this inductor 119 is to secure the direct current path of the second diode 117 and the values of those elements may be set to the values which provide a serial resonance between the inductance component of the second diode 117 and the parallel circuit of the capacitor 118 and the inductor 119 in the case that the second diode 117 has been turned on.

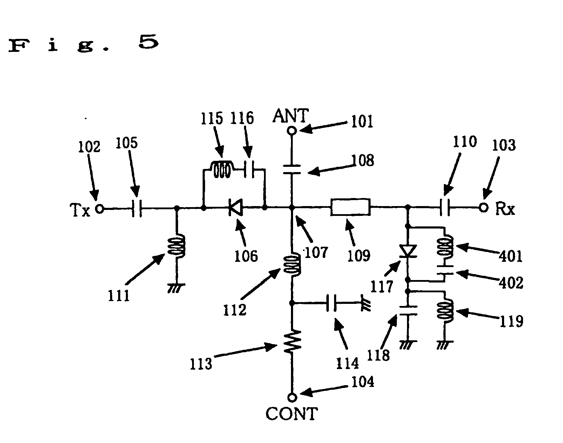

As shown in Fig 5, the anode and the cathode of the second diode 117 may be connected via the inductor 401 and the capacitor 402. In this case, at the time of reception, that is to say, when the second diode 117 has been turned off, the capacitance component and the serial circuit of the inductor 401 and the capacitor 402 form a parallel resonance circuit, which can implement further effects of lowering the loss.

### (Second Embodiment)

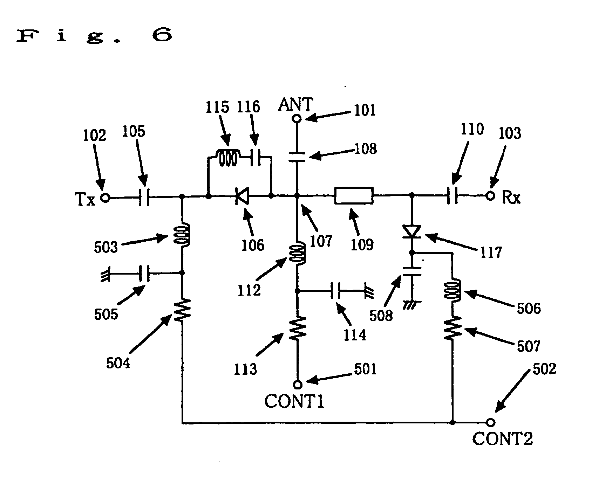

Fig 6 is a diagram showing a transmitting-receiving switch of the second embodiment according to the present invention.

In a transmitting-receiving switch of Fig 6, an antenna terminal 101 is connected to an antenna ANT, a transmission terminal 102 is connected to a transmission circuit Tx, a reception terminal 103 is connected to a receiving circuit Rx, the first control terminal 501 is connected to a control circuit CONT1 which carries out a switching control and the second control terminal 502 is connected to a control circuit CONT2 which carries out a switching control. The transmission terminal 102 is connected to the cathode of the first diode 106 via a capacitor 105 and the anode of the first diode 106 is connected to the antenna terminal 101 via a node 107 and a capacitor 108. The antenna terminal 101 is also connected to the reception terminal 103 via the capacitor 108, the node 107, a strip line 109 and a capacitor 110. And the cathode of the first diode 106 is connected to the second control terminal 502 via an inductor 503 and a resistance 504 and, the middle point between the inductor 503 and the resistance 504 is connected to the ground via a capacitor 505. The anode of the first diode 106 is connected to the first control terminal 501 via the node 107, an inductor 112 and a resistance 113, and the middle point between the inductor 112 and the resistance 113 is connected to the ground via a capacitor 114.

In addition, a serial circuit of an inductor 115 and a capacitor 116 is connected in parallel to the first diode 106. And the anode of the second diode 117 is connected to the middle point between the strip line 109 and the capacitor 110 and the cathode of the second diode 117 is connected to the second control terminal 502 via an inductor 506 and a resistance 507 and, the middle point between the inductor 506 and the resistance 507 is connected to the ground via a capacitor 508.

The operation of the transmitting-receiving switch of the present embodiment which has the above described configuration is described as follows:

First, the operation of connection to the transmission circuit is described. In the case that the transmission circuit Tx and the antenna ANT are connected in the transmitting-receiving switch, a positive voltage is applied to the first control terminal 501 from the first control circuit CONT1 so as to activate the first and the second diodes 106 and 117, and the halt of the voltage, the zero voltage or a negative voltage is applied to the second control terminal 502 from the second control circuit CONT2.

At this time, the positive voltage applied from the first control terminal 501 is cut off in the direct current by the capacitors 105, 108, 110, 114 , 116, 505 and 508 so that a positive voltage is applied only to the circuit including the first diode 106, the inductors 112, 503 and the resistances 113, 504 as well as the circuit including the second diode 117, the strip line 109, the inductors 112, 506 and the resistances 113, 507 so that the first and the second diodes 106 and 117 are turned on.

Under the above described condition, the transmission terminal 102 and the antenna terminal 101 are connected when the impedance there-between is lowered by turning on the first diode 106. At this time, though the cathode of the first diode 106 is connected to the second control terminal 502 via the inductor 503, there is no influence on the route between the transmission terminal 102 and the antenna terminal 101 in the high frequency under the condition where the inductor 503 works as a choke coil by making the impedance sufficiently high in the transmission frequency.

And the impedance on the side of the reception terminal 103 seen from the node 107 becomes too large to transmit a signal from the transmission terminal 102 to the receiving circuit Rx since the strip line 109 is connected to the ground in the high frequency so as to resonate by turning on the second diode 117.

At the time of transmission, the first and the second diodes 106 and 117 are turned on and, under this condition, an inductance component exists in those diodes and, therefore, the impedance of the receiving circuit Rx seen from the node 107 can not be made large enough.

Therefore, in the present embodiment, the cathode of the second diode 117 is connected to the ground via the capacitor 508 and, thereby, a serial resonance circuit is formed of the inductance component in the second diode 117 and the capacitor 508 so that the impedance of the receiving circuit Rx seen from the node 107 becomes large enough. Thereby, no signal from the transmission circuit Tx leaks to the receiving circuit Rx so that an insertion loss of the transmission circuit Tx and the antenna ANT can be made small.

Next, the operation of connection to the receiving circuit is described. In the case that an antenna ANT and a receiving circuit Rx are connected in the transmitting-receiving switch, a negative voltage is applied from the first control circuit CONT1 to the first control terminal 501 to turn off the first and the second diodes 106 and 117 and the halt of the voltage, the zero voltage or a positive voltage is applied to the second control terminal 502 from the second control circuit CONT2 and, as a result, the first and the second diodes 106 and 117 will be in the condition of being turned off.

Under the above described condition, a path from the antenna terminal 101 to the transmission terminal 102 is cut off by turning off the first diode 106 and, in addition, the impedance between the reception terminal 103 and the antenna terminal 101 is lowered by turning off the second diode 117 so that the both are connected.

At this time, a capacitance component exists in the first and the second diodes 106 and 117 and, therefore, in the case that a reception signal from the antenna ANT leaks to the transmission circuit Tx, that may lead to a further increase of the insertion loss of the reception due to the parallel connection of the second diode 117.

However, in a transmitting-receiving switch of the present embodiment, since an inductor 115 is connected to the first diode 106 in parallel, the capacitance component of the first diode 106 and the inductor 115 form a parallel resonance circuit so that the impedance on the transmission circuit side seen from the node 107 becomes quite large and a reception signal from the antenna ANT is transmitted to the receiving circuit Rx without leaking to the transmission circuit Tx.

In addition, the second diode 117 is connected to the first diode 106 in parallel and a negative voltage from the control terminal 501 is applied without being divided so that a sufficient bias voltage is applied in the backward direction and, therefore, the loss at the second diode 117 can be limited to the minimum so as to improve the insertion loss of the reception.

Though the above described operation and the effect of the second embodiment according to the present invention are the same as in the first embodiment, the difference of the second embodiment according to the present invention from the first embodiment is that the cathode ends of the first and the second diodes 106 and 107 are connected to the second control terminal 502. Thereby, at the time of reception, a sufficient voltage biased in the backward direction can be applied to the second diode 117 without using a negative voltage unlike in the first embodiment by applying the halt of the voltage or the zero voltage to the first control terminal 501 while applying a positive voltage to the second control terminal 502.

In the present embodiment, the first and the second diodes can be used, by inverting their polarities, respectively, as the second configuration example, in the same way as the second configuration example of the first embodiment.

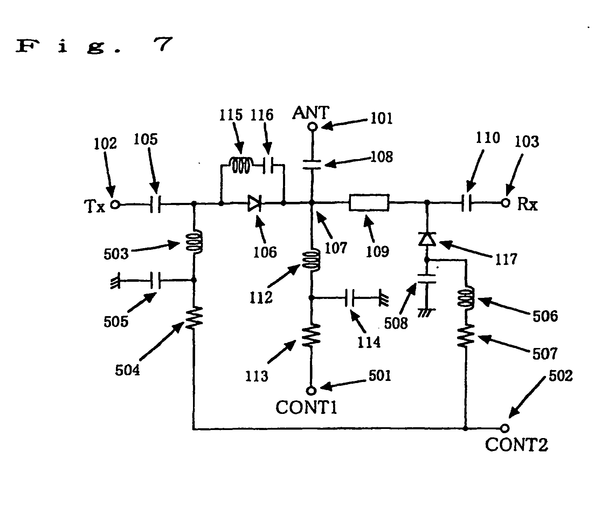

Fig 7 is a diagram showing the second configuration example according to the second embodiment of the present invention. As shown in the figure, in a transmitting-receiving switch, a transmission terminal 102 is connected to the anode of the first diode 106 via a capacitor 105 and the cathode of the first diode 106 is connected to the antenna terminal 101 via a node 107 and a capacitor 108. And the anode of the first diode 106 is connected to the second control terminal 502 via an inductor 503 and a resistance 504, and the middle point between the inductor 503 and the resistance 504 is connected to the ground via a capacitor 505. The cathode of the first diode 106 is connected to the first control terminal 501 via the node 107, an inductor 112 and a resistance 113, and the middle point between the inductor 112 and the resistance 113 is connected to the ground via a capacitor 114.

In addition, the cathode of the second diode 117 is connected to the middle point between the strip line 109 and the capacitor 110, the anode of the second diode 117 is connected to the second control terminal 502 via an inductor 506 and a resistance 507, and the middle point between the inductor 506 and the resistance 507 is connected to the ground via a capacitor 508.

As for the operation of the second configuration example according to the second embodiment of the present invention which has the above described configuration, in the case of the connection with the transmission circuit Tx, the operation is carried out by applying a negative voltage, which activates the first and the second diodes 106 and 117, to the first control terminal 501 from the first control circuit CONT1 and by applying the halt of the voltage, the zero voltage or a positive voltage to the second control terminal 502 from the second control circuit CONT2 and, in the case of the connection with the receiving circuit Rx, the operation is carried out by applying a positive voltage, which turns off the first and the second diodes 106 and 117, to the first control terminal 501 from the first control circuit CONT1 and by applying the halt of the voltage, the zero voltage or a negative voltage to the second control terminal 502 from the second control circuit CONT2 and, in either case, the same effects are gained as the above described first configuration example.

### (Third Embodiment)

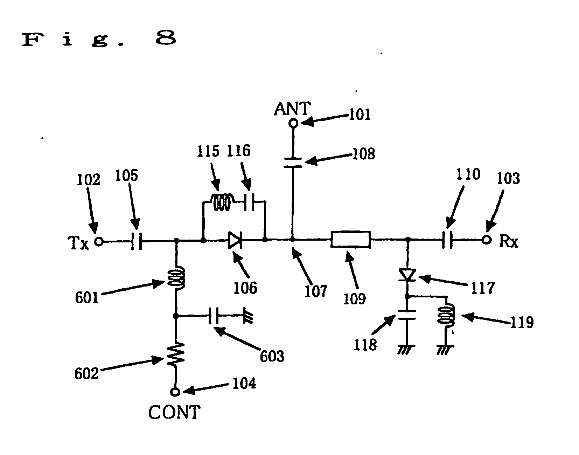

Fig 8 is a diagram showing a transmitting-receiving switch of the third embodiment.

In a transmitting-receiving switch of Fig 8, an antenna terminal 101 is connected to an antenna ANT, a transmission terminal 102 is connected to a transmission circuit Tx, a reception terminal 103 is connected to a receiving circuit Rx and a control terminal 104 is connected to a control circuit CONT which carries out a switching control. The transmission terminal 102 is connected to the anode of the first diode 106 via a capacitor 105 and the cathode of the first diode 106 is connected to the antenna terminal 101 via a node 107 and a capacitor 108. The antenna terminal 101 is also connected to the reception terminal 103 via the capacitor 108, the node 107, a strip line 109 and a capacitor 110. And the anode of the first diode 106 is connected to the control terminal 104 via an inductor 601 and a resistance 602, while the middle point between the inductor 601 and the resistance 602 is connected to the ground via a capacitor 603. In addition, a serial circuit of an inductor 115 and a capacitor 116 is connected in parallel to the first diode 106.

And the anode of the second diode 117 is connected to the middle point between the strip line 109 and the capacitor 110 and the cathode of the second diode 117 is connected to the ground via a capacitor 118 and an inductor 119 in parallel.

The operation of the transmitting-receiving switch of the present embodiment which has the above described configuration is described as follows.

First, the operation of connection to the transmission circuit is described. In the case that the transmission circuit Tx and the antenna ANT are connected in the transmitting-receiving switch, a positive voltage is applied to the control terminal 104 from the control circuit CONT so as to activate the first and the second diodes 106 and 117.

At this time, the positive voltage applied from the control terminal 104 is cut off in the direct current by the capacitors 105, 108, 110, 116, 118 and 603 so that a positive voltage is applied only to the circuit including the first and the second diodes 106 and 117, the inductors 601, 119, the resistance 602 and the strip line 109 so that the first and the second diodes 106 and 117 are turned on.

Under the above described condition, the transmission terminal 102 and the antenna terminal 101 are connected when the impedance there-between is lowered by turning on the first diode 106. At this time, though the anode of the first diode 106 is connected to the control terminal 104 via the inductor 601, there is no influence on the path between the transmission terminal 102 and the antenna terminal 101 in the high frequency under the condition where the inductor 601 works as a choke coil by making the impedance sufficiently high in the transmission frequency.

And the impedance on the side of the reception terminal 103 seen from the node 107 becomes too large to transmit a signal from the transmission terminal 102 to the receiving circuit Rx since the strip line 109 is connected to the ground in the high frequency so as to resonate by turning on the second diode 117.

At the time of transmission, the first and the second diodes 106 and 117 are turned on and, under this condition, an inductance component exists in those diodes and, therefore, the impedance of the receiving circuit Rx seen from the node 107 can not be made large enough.

Therefore, in the present embodiment, the cathode of the second diode 117 is connected to the ground via the capacitor 118 and, thereby, a serial resonance circuit is formed of the inductance component in the second diode 117 and the capacitor 118 so that the impedance of the receiving circuit Rx seen from the node 107 becomes large enough. Thereby, no signal from the transmission circuit Tx leaks to the receiving circuit Rx so that an insertion loss of the transmission circuit Tx and the antenna ANT can be made small.

Next, the operation of connection to the receiving circuit is described. In the case that an antenna ANT and a receiving circuit Rx are connected in the transmitting-receiving switch, a negative voltage is applied from the control circuit CONT to the control terminal 104 to turn off the first and the second diodes 106 and 117 and, moreover, a path from the antenna terminal 101 to the transmission terminal 102 is cut off by particularly turning off the first diode 106 and, in addition, the impedance between the reception terminal 103 and the antenna terminal 101 is lowered by turning off the second diode 117 so that the both are connected.

At this time, a capacitance component exists in the first and the second diodes 106 and 117 and, therefore, in the case that a reception signal from the antenna ANT leaks to the transmission circuit Tx, that may sometimes lead to a further increase of the insertion loss of the reception due to the parallel connection of the second diode 117 to the receiving path.

However, in a transmitting-receiving switch of the present embodiment, since an inductor 115 is connected to the first diode 106 in parallel in the same way as in the first and the second embodiments, the capacitance component of the first diode 106 and the inductor 115 form a parallel resonance circuit so that the impedance on the transmission circuit side seen from the node 107 becomes quite large and a reception signal from the antenna ANT is transmitted to the receiving circuit Rx without leaking to the transmission circuit Tx.

Here, in the present embodiment, there is a difference from the first embodiment as follows: while the first and the second diodes 106 and 117 are connected in parallel to the control terminal 104 in the configuration of the first embodiment, the first and the second diodes 106 and 117 are connected in series to the control terminal 104 in the configuration of the third embodiment. Though, in this case, a voltage applied in the backward direction to the second diode 117 at the time of reception is gained by division through a serial connection between the first diode 106 and the second diode 117, the effect of improving the loss at the time of reception, through the increase of the Q value of the second diode 117 by applying a voltage in the backward direction to the second diode 117, is the same as that of the first embodiment.

Accordingly, with respect to the second diode 117, since a sufficient bias voltage is applied in the backward direction, the loss at the second diode 117 is limited to the minimum so that the insertion loss of the reception can be improved.

In the present embodiment, the first and the second diodes can be used, by inverting their polarities, respectively, as the second configuration example, in the same way as the respective second configuration examples of the first and the second embodiments.

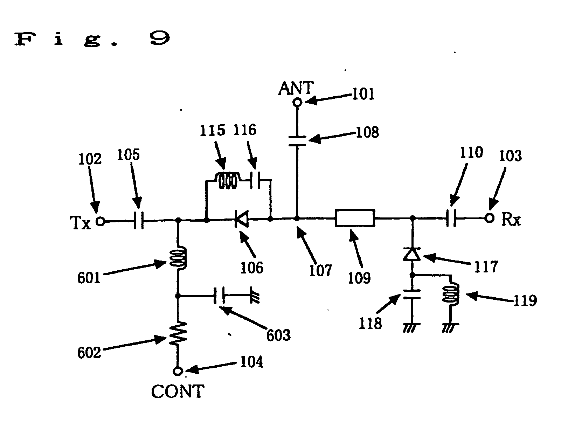

Fig 9 is a diagram showing the second configuration example according to the third embodiment. As shown in a transmitting-receiving switch of the figure, the transmission terminal 102 is connected to the cathode of the first diode 106 via a capacitor 105 and the anode of the first diode 106 is connected to the antenna terminal 101 via a node 107 and a capacitor 108. And the cathode of the first diode 106 is connected to the control terminal 104 via the inductor 601 and a resistance 602. In addition, the cathode of the second diode 117 is connected to the middle point between the strip line 109 and the capacitor 110 and the anode of the second diode 117 is connected to the ground via the capacitor 118 and the inductor 119 in parallel.

The operation of the second configuration example according to the third embodiment, which has the above described configuration, is as follows: in the case of the connection with the transmission circuit Tx, a negative voltage is applied from the control circuit CONT to the control terminal 104 so as to activate the first and the second diodes 106 and 117 and then to carry out a connection operation, and in the case of the connection with the receiving circuit Rx, a positive voltage is applied from the control circuit CONT to the control terminal 104 to turn off the first and the second diodes 106 and 117 so that, by turning off the first diode 106 so as to cut off the path from the antenna terminal 101 to the transmission terminal 102 as well as by turning off the second diode 117 so as to lower the impedance between the reception terminal 103 and the antenna terminal 101, the both are connected. In the operation of either case of the connection with the transmission circuit Tx or the receiving circuit Rx, the same effects can be gained as the above described first configuration example.

Here, in the first and the third embodiments, the effects are gained wherein the configuration is more simplified than in the prior art so as to be able to miniaturize the circuit by particularly arranging the control terminals for switching to become one entity.

It is the purpose of the present invention to provide a transmitting-receiving switch which can reduce the reception loss while maintaining the transmission characteristics by introducing the above described configuration which can apply a sufficient bias voltage in the backward direction to the diodes at the time of reception.

As described above, a transmitting-receiving switch comprises an antenna terminal connected to the antenna, a transmission terminal connected to the transmission circuit, a reception terminal connected to the receiving circuit, the first diode of which the cathode is connected to the above described transmission terminal end and of which the anode is connected to the above described antenna terminal end and the control terminal end, a strip line connected between the above described antenna terminal and the above described reception terminal and the second diode of which the anode is connected to a point between the above described strip line and the above described reception terminal and of which the cathode is connected to the ground, wherein the loss at the time of reception due to the parallel connection of the second diode can be improved by applying a sufficient voltage in the backward direction to the diodes at the time of reception so as to increase the Q value of the second diode.

As is clear from the above description, there is an effect that the insertion loss at the time of reception can be improved while maintaining the characteristics at the time of transmission in a transmitting-receiving switch according to the present invention.

## Claims

1. A transmitting-receiving switch comprising:
an antenna terminal (101, 107) connected to an antenna (ANT);
a transmission terminal (102) connected to a transmission circuit (Tx);
a reception terminal (103) connected to a receiving circuit (Rx);
a first control terminal (501, CONT₁) for applying a first voltage;
a second control terminal (502, CONT₂) for applying a second voltage which is different from the first voltage;
a distributed or concentrated constant circuit (109) including at least a strip line and having a length of substantially ¼ wavelength, connected between the antenna terminal (101, 107) and the reception terminal (Rx);
a first diode (106) and a second diode (117);
**characterized in that:**
the anode of the first diode (106) is connected to the antenna terminal (101, 107) and the first control terminal (501, CONT₁), the cathode of the first diode (106) is connected to the transmission terminal (102, Tx), and the second control terminal (502, CONT₂), the anode of the second diode (117) is connected to the antenna terminal (101, 107) and the first control terminal (501, CONT₁) via the constant circuit (109), and also connected to the reception terminal (103); the cathode of the second diode (117) is connected
to the second control terminal (502, CONT₂); wherein
the first control terminal (501, CONT₁) is adapted to be common to the first and second diode (106, 117) and the both diodes are adapted to be DC connected in parallel with respect to the first control terminal (501, CONT₁) between the first control terminal (501, CONT₁) and the second control terminal (502, CONT₂), wherein a bias voltage from the first control terminal (501, CONT₁) is simultaneously applied to the both diodes, thereby a voltage is supplied to turn on or turn off the both diodes.

2. A transmitting-receiving switch comprising:
an antenna terminal (101, 107) connected to an antenna (ANT);
a transmission terminal (102) connected to a transmission circuit (Tx);
a reception terminal (103) connected to a receiving circuit (Rx);
a first control terminal (501, CONT₁) for applying a first voltage;
a second control terminal (502, CONT₂) for applying a second voltage which is different from the first voltage;
a distributed or concentrated constant circuit (109) including at least a strip line and having a length of substantially ¼ wavelength, connected between the antenna terminal (101, 107) and the reception terminal (Rx);
a first diode (106) and a second diode (117);
**characterized in that**
wherein the cathode of the first diode (106) is connected to the antenna terminal (101, 107) and the first control terminal (501, CONT₁), the anode of the first diode is connected to the transmission terminal (102, Tx) and the second control terminal (502, CONT₂); the cathode of the second diode (117) is connected to the antenna terminal (101, 107) and the first control terminal (501, CONT₁) via the constant circuit (109), and also connected to the reception terminal (103); an anode of the second diode (117) is connected to the second control terminal (502, CONT₂); wherein
the first control terminal (501) is adapted to be common for the first and second diode (106, 107) and the both diodes are adapted to be DC connected in parallel with respect to the first control terminal (501, CONT₁) between the first control terminal (501, CONT₁) and the second control terminal (502, CONT₂), wherein a bias voltage from the first control terminal (501, CONT₁) is simultaneously applied to the both diodes, thereby a voltage is supplied to turn or turn off the both diodes.

3. The transmitting-receiving switch according to claim 1, **characterized in that**:
(1) a positive voltage is applied to the first control terminal (501) and no voltage is applied or a negative voltage is applied to the second control terminal (502) in the transmission mode; or
(2) no voltage is applied or a positive voltage is applied to the second control terminal (502) and a negative voltage is applied to the first control terminal (501) in the reception mode.

4. The transmitting-receiving switch according to claim 3, wherein the first diode (106) and the second diode (117) are turned on in the transmission mode, and are turned off in the reception mode.

5. The transmitting-receiving switch according to claim 2, **characterized in that**:
a. a negative voltage is applied to the first control terminal (501) and no voltage is applied or a positive voltage is applied to the second control terminal (502) in the transmission mode; and
b. no voltage is applied or a negative voltage is applied to the second control terminal (502) and a positive voltage is applied to the first control terminal (501) in the reception mode.

6. The transmitting-receiving switch according to claim 5, wherein the first diode (106) and the second diode (117) are turned on in the transmission mode, and are turned off in the reception mode.

7. The transmitting-receiving switch according to claim 1, **characterized in that**,
a serial circuit of an inductor (115) and a capacitor (116) is connected in parallel to the first diode (106),
the cathode of the second diode (117) is connected to the second control terminal (502) via an inductor (506) and a resistance (507), and
the cathode of the second diode (117) is connected to ground via a capacitor (508).

8. The transmitting-receiving switch according to claim 2, **characterized in that**,
a serial circuit of an inductor (115) and a capacitor (116) is connected in parallel to the first diode (106),
the anode of the second diode (117) is connected to the second control terminal (502) via an inductor (506) and a resistance (507), and
the anode of the second diode (117) is connected to ground via a capacitor (508).

9. The transmitting-receiving switch according to claim 1, **characterized in that**, a positive voltage is applied simultaneously from the first control terminal (501) to the first diode and the second diode at the time of transmission, and a negative voltage is applied simultaneously from the first control terminal (501) to the first diode and the second diode in the reception mode.

10. The transmitting-receiving switch according to claim 2, **characterized in that**, a negative voltage is applied simultaneously from the first control terminal (501) to the first diode and the second diode in the transmission mode, and a positive voltage is applied simultaneously from the first control terminal (501) to the first diode and the second diode in the reception mode.

11. The transmitting-receiving switch according to any of claims 1-8, **characterized in that** the negative voltage, which is applied to the first control terminal (501) or the second control terminal (502), is set so that the Q value of the second diode (117) becomes 1.5 times or more larger than the Q value when the negative voltage is not applied or the zero voltage is applied.

12. The transmitting-receiving switch according to any of claims 1-8, **characterized in that** the positive voltage, which is applied to the first control terminal (501) or the second control terminal (502), is set so that the Q value of the second diode (117) becomes 1.5 times or more larger than the Q value when the positive voltage is not applied or the zero voltage is applied.

## Patentansprüche

1. Sende-Empfangs-Umschaltvorrichtung die umfasst:
einen Antennen-Anschluss (101, 107), der mit einer Antenne (ANT) verbunden ist;
einen Sende-Anschluss (102), der mit einer Sende-Schaltung (Tx) verbunden ist;
einen Empfangs-Anschluss (103), der mit einer Empfangs-Schaltung (Rx) verbunden ist;
einen ersten Steuer-Anschluss (501, CONT₁) zum Anlegen einer ersten Spannung;
einen zweiten Steuer-Anschluss (502, CONT₂) zum Anlegen einer zweiten Spannung, die sich von der ersten Spannung unterscheidet;
eine verteilte oder konzentrierte Konstantschaltung (109), die wenigstens eine Streifenleitung enthält, die eine Länge von im Wesentlichen ¼ Wellenlänge hat und zwischen den Antennen-Anschluss (101, 107) und den Empfangs-Anschluss (Rx) geschaltet ist;
eine erste Diode (106) und eine zweite Diode (117);
**dadurch gekennzeichnet, dass**:
die Anode der ersten Diode (106) mit dem Antennen-Anschluss (101, 107) und dem ersten Steuer-Anschluss (501, CONT₁) verbunden ist, die Kathode der ersten Diode (106) mit dem Sende-Anschluss (102 Tx) und dem zweiten Steuer-Anschluss (502, CONT₂) verbunden ist, die Anode der zweiten Diode (117) über die Konstantschaltung (109) mit dem Antennen-Anschluss (101, 107) und dem ersten Steuer-Anschluss (501, CONT₁) verbunden ist und ebenfalls mit dem Empfangs-Anschluss (103) verbunden ist, und die Kathode der zweiten Diode (117) mit dem zweiten Steuer-Anschluss (502, CONT₂) verbunden ist; wobei
der erste Steuer-Anschluss (501, CONT₁) so eingerichtet ist, dass er von der ersten und der zweiten Diode (106, 117) gemeinsam genutzt wird, und die beiden Dioden so eingerichtet sind, dass sie in Gleichstromverbindung in Bezug auf den ersten Steuer-Anschluss (501, CONT₁) parallel zwischen den ersten Steuer-Anschluss (501, CONT₁) und den zweiten Steuer-Anschluss (502, CONT₂) geschaltet sind, wobei eine Vorspannung von dem ersten Steuer-Anschluss (501, CONT₁) gleichzeitig an die beiden Dioden angelegt wird und so eine Spannung zugeführt wird, um die beiden Dioden leitend oder gesperrt zu schalten.

2. Sende-Empfangs-Umschaltvorrichtung, die umfasst:
einen Antennen-Anschluss (101, 107), der mit einer Antenne (ANT) verbunden ist;
einen Sende-Anschluss (102), der mit einer Sende-Schaltung (Tx) verbunden ist;
einen Empfangs-Anschluss (103), der mit einer Empfangs-Schaltung (Rx) verbunden ist;
einen ersten Steuer-Anschluss (501, CONT₁) zum Anlegen einer ersten Spannung;
einen zweiten Steuer-Anschluss (502, CONT₂) zum Anlegen einer zweiten Spannung, die sich von der ersten Spannung unterscheidet;
eine verteilte oder konzentrierte Konstantschaltung (109), die wenigstens eine Streifenleitung enthält, die eine Länge von im Wesentlichen ¼ Wellenlänge hat und zwischen den Antennen-Anschluss (101, 107) und den Empfangs-Anschluss (Rx) geschaltet ist;
eine erste Diode (106) und eine zweite Diode (117);
**dadurch gekennzeichnet, dass:**
die Kathode der ersten Diode (106) mit dem Antennen-Anschluss (101, 107) und dem ersten Steuer-Anschluss (501, CONT₁) verbunden ist, die Anode der ersten Diode mit dem Sende-Anschluss (102, Tx) und dem zweiten Steuer-Anschluss (502, CONT₂) verbunden ist, die Kathode der zweiten Diode (117) über die Konstantschaltung (109) mit dem Antennen-Anschluss (101, 107) und dem ersten Steuer-Anschluss (501, CONT₁) verbunden ist und ebenfalls mit dem Empfangs-Anschluss (103) verbunden ist und die Anode der zweiten Diode (117) mit dem zweiten Steuer-Anschluss verbunden ist; wobei
der erste Steuer-Anschluss (501) so eingerichtet ist, dass er von der ersten und der zweiten Diode (106, 107) gemeinsam genutzt wird und die beiden Dioden so eingerichtet sind, dass sie in Gleichstromverbindung in Bezug auf den ersten Steuer-Anschluss (501, CONT₁) parallel zwischen den ersten Steuer-Anschluss (501, CONT₁) und den zweiten Steuer-Anschluss (502, CONT₂) geschaltet sind, wobei eine Vorspannung von dem ersten Steuer-Anschluss ((501, CONT₁) gleichzeitig an die beiden Dioden angelegt wird und so eine Spannung zugeführt wird, um die beiden Dioden leitend oder gesperrt zu schalten.

3. Sende-Empfangs-Umschaltvorrichtung nach Anspruch 1,
**dadurch gekennzeichnet, dass**
(1) in dem Sende-Betrieb eine positive Spannung an den ersten Steuer-Anschluss (501) angelegt wird und keine Spannung oder eine negative Spannung an den zweiten Steuer-Anschluss (502) angelegt wird; oder
(2) in dem Empfangs-Betrieb keine Spannung oder eine positive Spannung an den zweiten Steuer-Anschluss (502) angelegt wird und eine negative Spannung an den ersten Steuer-Anschluss angelegt wird.

4. Sende-Empfangs-Umschaltvorrichtung nach Anspruch 3, wobei die erste Diode (106) und die zweite Diode (117) im Sende-Betrieb leitend geschaltet werden und im Empfangs-Betrieb gesperrt geschaltet werden.

5. Sende-Empfangs-Umschaltvorrichtung nach Anspruch 2,
**dadurch gekennzeichnet, dass**:
a) in dem Sende-Betrieb eine negative Spannung an den ersten Steuer-Anschluss (501) angelegt wird und keine Spannung oder eine positive Spannung an den zweiten Steuer-Anschluss (502) angelegt wird; und
b) in dem Empfangs-Betrieb keine Spannung oder eine negative Spannung an den zweiten Steuer-Anschluss (502) angelegt wird und eine positive Spannung an den ersten Steuer-Anschluss (501) angelegt wird.

6. Sende-Empfangs-Umschalt-Vorrichtung nach Anspruch 5, wobei die erste Diode (106) und die zweite Diode (117) in dem Sende-Betrieb leitend geschaltet werden und in dem Empfangs-Betrieb gesperrt geschaltet werden.

7. Sende-Empfangs-Umschaltvorrichtung nach Anspruch 1,
**dadurch gekennzeichnet, dass**
eine Reihenschaltung aus einem Induktor (115) und einem Kondensator (116) parallel zu der ersten Diode (106) geschaltet ist,
die Kathode der zweiten Diode (117) über einen Induktor (506) und einen Widerstand (507) mit dem zweiten Steuer-Anschluss (502) verbunden ist, und
die Kathode der zweiten Diode (117) über einen Kondensator (508) mit Erde verbunden ist.

8. Sende-Empfangs-Umschaltvorrichtung nach Anspruch 2,
**dadurch gekennzeichnet, dass**
eine Reihenschaltung aus einem Induktor (117) und einem Kondensator (116) parallel zu der ersten Diode (106) geschaltet ist,
die Anode der zweiten Diode (117) über einen Induktor (506) und einen Widerstand (507) mit dem zweiten Steuer-Anschluss (502) verbunden ist, und
die Anode der zweiten Diode (117) über einen Kondensator (508) mit Erde verbunden ist.

9. Sende-Empfangs-Umschaltvorrichtung nach Anspruch 1,
**dadurch gekennzeichnet, dass**
zum Zeitpunkt des Sendens eine positive Spannung von dem ersten Steuer-Anschluss (501) gleichzeitig an die erste Diode und die zweite Diode angelegt wird und im Empfangs-Betrieb eine negative Spannung von dem ersten Steuer-Anschluss (501) gleichzeitig an die erste und die zweite Diode angelegt wird.

10. Sende-Empfangs-Umschaltvorrichtung nach Anspruch 2,
**dadurch gekennzeichnet, dass**
in dem Sende-Betrieb eine negative Spannung von dem ersten Steuer-Anschluss (501) gleichzeitig an die erste Diode und die zweite Diode angelegt wird und in dem Empfangs-Betrieb eine positive Spannung von dem ersten Steuer-Anschluss (501) gleichzeitig an die erste Diode und die zweite Diode angelegt wird.

11. Sende-Empfangs-Umschaltvorrichtung nach einem der Ansprüche 1-8,
**dadurch gekennzeichnet, dass**
die negative Spannung, die an den ersten Steuer-Anschluss (5019 oder den zweiten Steuer-Anschluss (502) angelegt wird, so eingestellt ist, dass der Q-Wert der zweiten Diode (117) 1,5 mal oder mehr größer wird als der Q-Wert, wenn die negative Spannung nicht angelegt wird oder die Null-Spannung angelegt wird.

12. Sende-Empfangs-Umschaltvorrichtung nach einem der Ansprüche 1-8,
**dadurch gekennzeichnet, dass**
die positive Spannung, die an den ersten Steuer-Anschluss (501) oder den zweiten Steuer-Anschluss (502) angelegt wird, so eingestellt ist, dass der Q-Wert der zweiten Diode (117) 1,5 mal oder mehr größer wird als der Q-Wert, wenn die positive Spannung nicht angelegt wird oder die Null-Spannung angelegt wird.

## Revendications

1. Commutateur d'émission - réception comprenant:
une borne d'antenne (101, 107) raccordée à une antenne (ANT) ;
une borne de transmission (102) raccordée à un circuit de transmission (Tx) ;
une borne de réception (103) raccordée à un circuit de réception (Rx) ;
une première borne de commande (501, CONT1) pour appliquer une première tension ;
une seconde borne de commande (502, CONT2) pour appliquer une seconde tension qui est différente de la première tension ;
un circuit à constantes réparties ou concentrées (109) incluant au moins une ligne à ruban et ayant une longueur de sensiblement ¼ de longueur d'onde, raccordé entre la borne d'antenne (101, 107) et la borne de réception (Rx) ;
une première diode (106) et une seconde diode (107) ;
**caractérisé en ce que** :
l'anode de la première diode (106) est raccordée à la borne d'antenne (101, 107) et à la première borne de commande (501, CONT1), la cathode de la première diode (106) est raccordée à la borne de transmission (102, Tx) et à la seconde borne de commande (502, CONT2) ; l'anode de la seconde diode (117) est raccordée à la borne d'antenne (101, 107) et à la première borne de commande (501, CONT1) via le circuit à constantes (109) et est également raccordée à la borne de réception (103) ; la cathode de la seconde diode (117) est raccordée à la seconde borne de commande (502, CONT2) ; dans lequel
la première borne de commande (501, CONT1) est adaptée pour être commune à la première diode et à la seconde diode (106, 117) et les deux diodes sont adaptées pour être raccordées par un CC (courant continu) en parallèle par rapport à la première borne de commande (501, CONT1) entre la première borne de commande (501, CONT1) et la seconde borne de commande (502, CONT2), dans lequel une tension de polarisation provenant de la première borne de commande (501, CONT1) est, en même temps, appliquée aux deux diodes de sorte qu'une tension est fournie pour mettre sous tension ou pour mettre hors tension les deux diodes.

2. Commutateur d'émission - réception comprenant :
une borne d'antenne (101, 107) raccordée à une antenne (ANT) ;
une borne de transmission (102) raccordée à un circuit de transmission (Tx) ;
une borne de réception (103) raccordée à un circuit de réception (Rx) ;
une première borne de commande (501, CONT1) pour appliquer une première tension ;
une seconde borne de commande (502, CONT2) pour appliquer une seconde tension qui est différente de la première tension ;
un circuit à constantes réparties ou concentrées (109) incluant au moins une ligne à ruban et ayant une longueur de sensiblement ¼ de longueur d'onde, raccordé entre la borne d'antenne (101, 107) et la borne de réception (Rx) ;
une première diode (106) et une seconde diode (107) ;
**caractérisé en ce que** :
la cathode de la première diode (106) est raccordée à la borne d'antenne (101, 107) et à la première borne de commande (501, CONT1), l'anode de la première diode (106) est raccordée à la borne de transmission (102, Tx) et à la seconde borne de commande (502, CONT2) ; la cathode de la seconde diode (117) est raccordée à la borne d'antenne (101, 107) et à la première borne de commande (501, CONT1) via le circuit à constantes (109) et est également raccordée à la borne de réception (103) ; une anode de la seconde diode (117) est raccordée à la seconde borne de commande (502, CONT2) ; dans lequel
la première borne de commande (501) est adaptée pour être commune à la première diode et à la seconde diode (106, 117) et les deux diodes sont adaptées pour être raccordées par un CC (courant continu) en parallèle par rapport à la première borne de commande (501, CONT1) entre la première borne de commande (501, CONT1) et la seconde borne de commande (502, CONT2), dans lequel une tension de polarisation provenant de la première borne de commande (501, CONT1) est, en même temps, appliquée aux deux diodes de sorte qu'une tension est fournie pour mettre sous tension ou pour mettre hors tension les deux diodes.

3. Commutateur d'émission - réception selon la revendication 1, **caractérisé en ce que** :
(1) une tension positive est appliquée à la première borne de commande (501) et aucune tension n'est appliquée, ou une tension négative est appliquée, à la seconde borne de commande (502) en mode transmission ; ou
(2) aucune tension n'est appliquée ou une tension positive est appliquée à la seconde borne de commande (502) et une tension négative est appliquée à la première borne de commande (501) en mode réception.

4. Commutateur d'émission - réception selon la revendication 3, dans lequel la première diode (106) et la seconde diode (117) sont mises sous tension en mode transmission et sont mises hors tension en mode réception.

5. Commutateur d'émission - réception selon la revendication 2, **caractérisé en ce que** :
(1) une tension négative est appliquée à la première borne de commande (501) et aucune tension n'est appliquée, ou une tension positive est appliquée, à la seconde borne de commande (502) en mode transmission ; et
(2) aucune tension n'est appliquée ou une tension négative est appliquée à la seconde borne de commande (502) et une tension positive est appliquée à la première borne de commande (501) en mode réception.

6. Commutateur d'émission - réception selon la revendication 5, dans lequel la première diode (106) et la seconde diode (117) sont mises sous tension en mode transmission et sont mises hors tension en mode réception.

7. Commutateur d'émission - réception selon la revendication 1, **caractérisé en ce que**
un circuit série d'un inducteur (115) et d'un condensateur (116) est raccordé en parallèle à la première diode (106),
la cathode de la seconde diode (117) est raccordée à la seconde borne de commande (502) via un inducteur (506) et une résistance (507), et
la cathode de la seconde diode (117) est raccordée à la masse via un condensateur (508).

8. Commutateur d'émission - réception selon la revendication 2, **caractérisé en ce que**
un circuit série d'un inducteur (115) et d'un condensateur (116) est raccordé en parallèle à la première diode (106),
l'anode de la seconde diode (117) est raccordée à la seconde borne de commande (502) via un inducteur (506) et une résistance (507), et
l'anode de la seconde diode (117) est raccordée à la masse via un condensateur (508).

9. Commutateur d'émission - réception selon la revendication 1, **caractérisé en ce qu'**une tension positive est appliquée, depuis la première borne de commande (501), en même temps à la première diode et à la seconde diode au moment de la transmission et une tension négative est appliquée depuis la première borne de commande (501) en même temps à la première diode et à la seconde diode en mode réception.

10. Commutateur d'émission - réception selon la revendication 2, **caractérisé en ce qu'**une tension négative est appliquée, depuis la première borne de commande (501), en même temps à la première diode et à la seconde diode en mode transmission et une tension positive est appliquée depuis la première borne de commande (501) en même temps à la première diode et à la seconde diode en mode réception.

11. Commutateur d'émission - réception selon l'une quelconque des revendications 1 à 8, **caractérisé en ce que** la tension négative, qui est appliquée à la première borne de commande (501) ou à la seconde borne de commande (502), est déterminée de telle sorte que la valeur de Q de la seconde diode (117) est 1,5 fois, ou davantage, plus élevée que la valeur de Q lorsque la tension négative n'est pas appliquée ou lorsque la tension nulle est appliquée.

12. Commutateur d'émission - réception selon l'une quelconque des revendications 1 à 8, **caractérisé en ce que** la tension positive, qui est appliquée à la première borne de commande (501) ou à la seconde borne de commande (502), est déterminée de telle sorte que la valeur de Q de la seconde diode (117) est 1,5 fois, ou davantage, plus élevée que la valeur de Q lorsque la tension positive n'est pas appliquée ou lorsque la tension nulle est appliquée.
